# EUROPEAN PATENT APPLICATION

(11) **EP 3 447 008 A1**
(43) Date of publication of application: **27.02.2019**
(21) Application number: 17188004.0
(22) Date of filing: 25.08.2017
(51) Int. Cl.: B65G 39/10, B65G 1/04, H02G 11/00

(54) **A CHAIN ROLLER AND A CART SUPPORTING SUCH A CHAIN ROLLER**

(71) Applicant: Logevo AB, 343 24 Älmhult (SE)
(72) Inventor: Bäckström, Adam, 22464 Lund (SE)
(74) Representative: Hansson Thyresson AB

(57) **Abstract**

A chain roller (59) having a first axis of rotation (57) for guiding an e-chain (58) having a width w from an input running direction to an output running direction, wherein input running direction is substantially in parallel with output running direction and wherein output running direction is displaced substantially perpendicular to input running direction. Two discs are (61) separated by a plurality of rotating rolls (63) supporting e-chain (58), wherein end sections of rotating rolls (63) engage said discs (61) in spaced apart positions at a radial distance from first axis of rotation (57), and wherein opposite ends of rotating rolls (63) engaging said discs (58) are displaced a distance t.

A cart (28) supporting a shuttle (40) moveable back and forth along a track after leaving cart (28), a chain roller (59) rotatatably supported by said cart (28) and having a first axis of rotation (57) for guiding an e-chain (58) having a width w from a cable winder (56) having a second axis of rotation to shuttle (40).

## Description

### TECHNICAL FIELD

A multi-storey goods storage arrangement comprises a plurality of levels of storage lines arranged in parallel, each storage line supporting a plurality of baseboards or pallets with packages and other goods, and transport aisles extending in parallel between opposing ends of sets of said storage lines. Shuttles move automatically in and out of the storage lines to place or pickup goods and packages.

### PRIOR ART

Multi-storey goods storage arrangements or pallet racks are used in a wide area of applications, such as conventional warehouses, storages and stores. Goods, such as packages or cases, are normally arranged on pallets that are transported in the multi-storey goods storage arrangement by various kinds of carts, carriages, shuttles and conveyors. In automated multi-storey goods storage arrangements, the carriages, shuttles and conveyors are controlled by computer systems and pick up, transport, store and deliver goods without human influence. One type of carts moves along transport aisles, each of said carts carrying a shuttle.

Shuttles or picker carts moving back and forth in storage lines to and from the carts are power supplied in numerous ways. It is common to provide a plurality of batteries or super capacitors in the shuttles, so as to make them autonomous. There are also provided shuttles using power cords or power cables that are wound up on a cable winder or wheel on the cart. Normally, the cart is power supplied by current collectors or similar arrangements in the transport aisles. The power cords or cables are quite exposed and can be damages during movement of the shuttle or picker cart.

### SUMMARY OF THE INVENTION

In various embodiments said carts are provided with a cable winder. The power cord of the cable winder is electrically connected to a power outlet on said cart for providing electric power to a lifting device on shuttle or picker cart. Also compressed air and control signals can be transferred through the cable or cables. The length of the cables is equal to or extends the length of a storage line to allow operation in the full length of a storage line. As a result, a lifting yoke and other devices on the shuttle or picker cart are provided with electric power and control signals during operation. Cable or cables is supported by an e-chain that will provide protection to the cable.

In accordance with the invention a chain roller is provided to guide the e-chain from an input running direction to an output running direction, wherein input running direction is substantially in parallel with output running direction and wherein output running direction is displaced substantially perpendicular to input running direction. In various embodiments of the invention a chain roller is provided to guide the e-chain from cable winder to the shuttle or picker cart. Several turns of the e-chain will be supported by the chain roller and allow cable winder to be arranged axially displaced from an attachment position where e-chain is attached to shuttle or picker cart. As a result, a cable winder having a large diameter to support a long e-chain can be used without interfering with movements of the shuttle or picker cart along a track in a storage line. Chain roller comprises two axially displaced plates or discs and a plurality of rotating rolls extending between the plates or discs. Rotating rolls are arranged to guide e-chain in a helix form over chain roller. The plates or discs have been rotated in relation to each other to dislocate ends of rotating rolls from an axial direction of chain roller.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic partial top view of one level of a multi-storey goods storage arrangement in which a first embodiment of a chain roller in accordance with the invention is used on shuttles,
- Fig. 2: is a schematic side view of an embodiment of a picking aisle in a four-level multi-storey goods storage arrangement in which a first embodiment of a chain roller in accordance with the invention is used,
- Fig. 3: is a schematic side view of a picker cart supporting a chain roller in accordance with the invention, the picker cart having lowered lifting means supporting a package,
- Fig. 4: is a schematic front view of the picker cart shown in Fig. 3,
- Fig. 5: is a schematic side view of a picker transfer cart capable of supporting picker cart of Fig. 3 and Fig. 4 and a chain roller,
- Fig. 6: is a schematic top view of the picker transfer cart shown in Fig. 5,
- Fig. 7a: is a schematic top view of one embodiment of the chain roller in accordance with the invention,
- Fig. 7b: is a schematic cross section view from *B-B* in Fig. 7a, and
- Fig. 8: is a more detailed top view of one embodiment of a picker cart supporting a chain roller in accordance with the invention.

### DETAILED DESCRIPTION

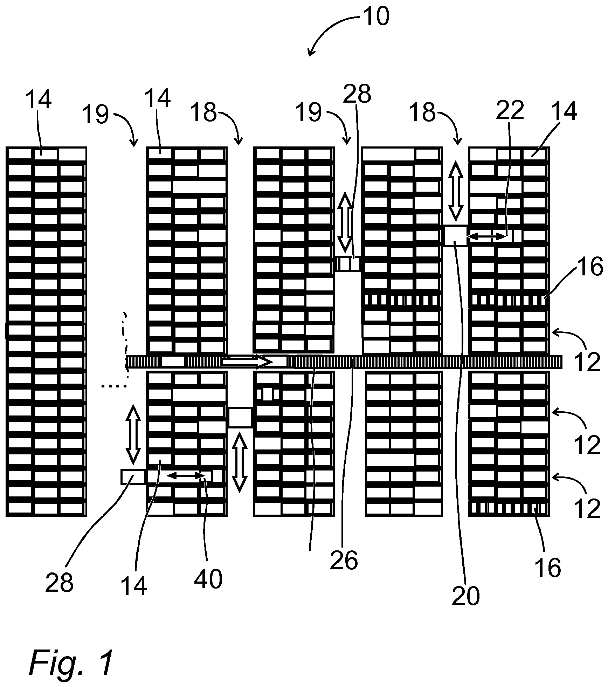

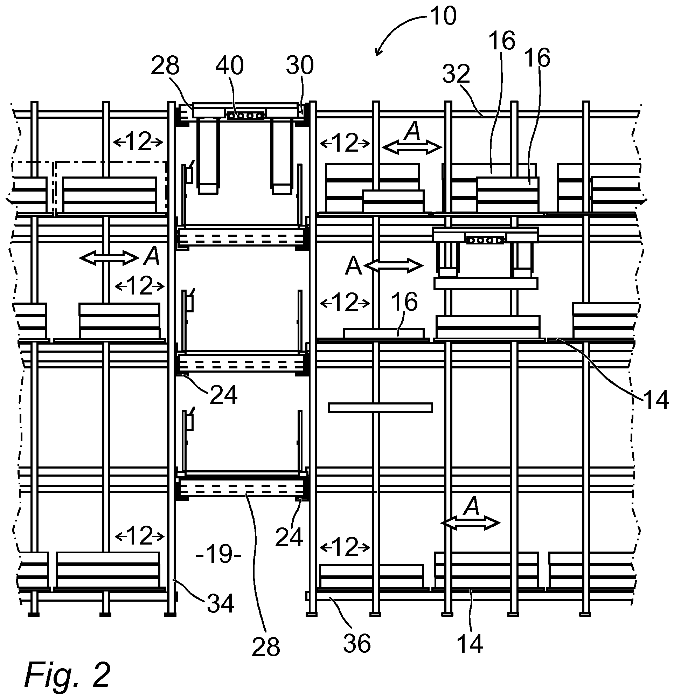

In the embodiment shown in Fig. 1 and Fig. 2 a multi-storey goods storage arrangement or pallet racking 10 comprises a plurality of levels of storage lines 12 in which pallets 14 with packages 16 are stored. The storage lines 12 extend in two opposite directions from transport lines 18 extending between opposite ends of said storage lines 12, said transport lines 18 also having a plurality of levels. Baseboard transfer carts 20 supporting a shuttle 22 operate in said transport lines 18 in a direction perpendicular to the storage lines 12. The shuttle 22 is supported in a conventional way on a rail system in a lower section of the baseboard transfer cart 20. A corresponding rail system extends along said storage lines 12 to allow said shuttle 22 to transport pallets 14 to and from selected positions along said storage lines 12.

The rail system in said storage lines also supports baseboards or pallets 14 on which packages 16 are stored. Normally each baseboard 14 in one storage line 12 supports one type of articles or packages. Packages are received to and delivered from the multi-storey goods storage arrangement through different means. The multi-storey goods storage arrangement basically is a pallet racking with a plurality of uprights 34 and horizontal load beams 36. The load beams 36 can be designed as or include said rail system for supporting the shuttle 22. Conventional diagonal braces and horizontal braces can also be used.

The multi-storey goods storage arrangement shown in Fig. 1 and Fig. 2 comprises also picking aisles 19 in which picker transfer carts 28 operate. The picking aisles 19 extend parallel to the transport aisles 18 and are normally arranged between transport aisles 18 forming an arrangement with alternating transport aisles 18 and picking aisles 19. Picker transfer carts 28 operate back and forth in each picking aisle 19 running on rails 24. Each picker transfer cart 28 supports a picker cart 40 suspended from a top rail arrangement 30 and movable into and out of a suspension rail arrangement 32 in the storage lines 12 as indicated by arrow *A.*

In each picking aisle 19 at least one picker transfer cart 28 is arranged to pick up packages 16 in the storage lines 12 using a picker cart 40. The shuttles 22 and the picker carts 40 have an operation distance corresponding the length of a storage line 12 between a transport aisle 18 and a picking aisle 19. All baseboards 14 and packages 16, respectively, in each storage line thus can be reached and positioned correctly.

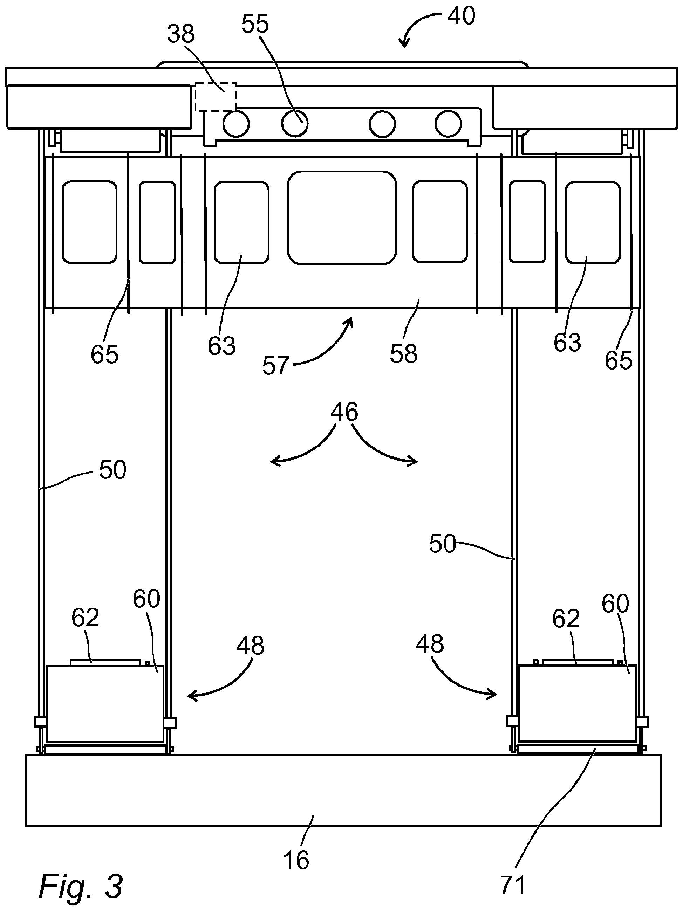

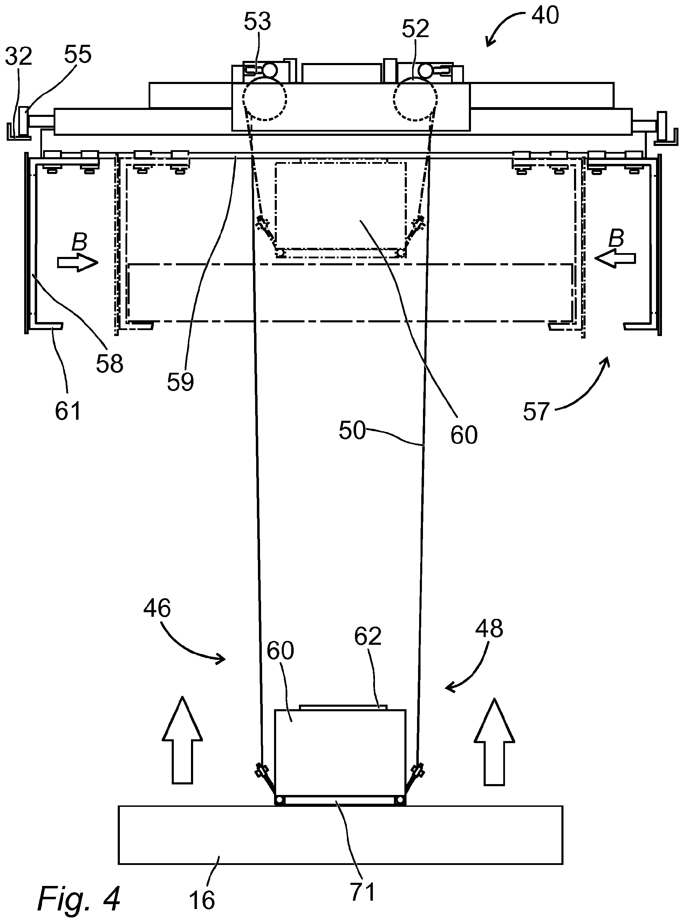

In various embodiments, such as those shown in Fig. 3 and Fig. 4, the picker cart 40 comprises lifting means 46 for lifting top packages disposed on pallets in the storage lines 12. The lifting means 46 is designed in dependence on the type of goods, packages or boxes that are stored in the storage lines 12. In the embodiment shown in Fig. 3 and Fig. 4 the lifting means 46 comprises two lifting yokes 48 suspended in hoisting belts 50.

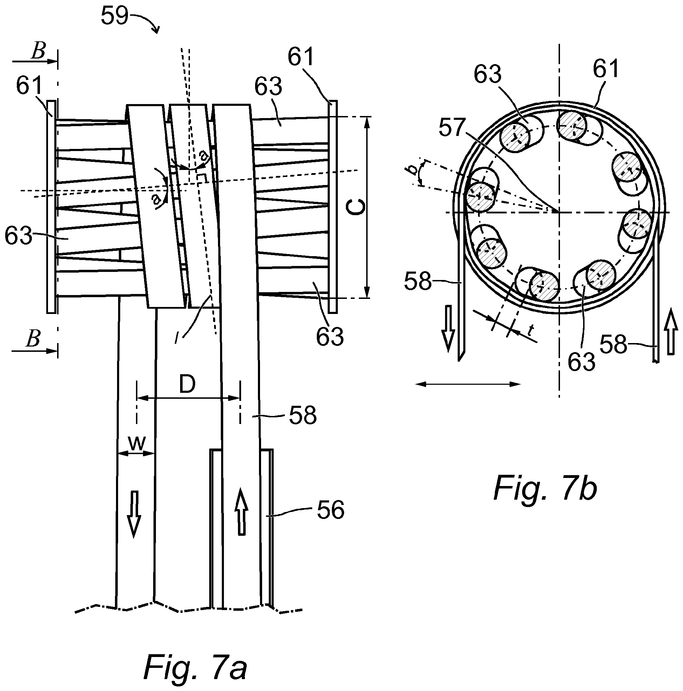

The picker cart 40 supports the lifting means 46 comprising the lifting yoke 48 suspended in hoisting belts 50. The hoisting belts 50 are suspended from hoisting wheels 52 driven by a motor and gearbox 53. The lifting yoke 48 comprises a fan such as a suction device 60 driven by a suction motor 62. The picker cart 40 is driven by an electric motor 38, c.f. Fig. 7. The electric motor 38 and other electric equipment of the picker cart 40 can be provided with electric power from a power outlet on the picker transfer cart 28 through a control cable 54. The picker transfer cart 28 is powered through a conductor rail (not shown) in the rails 24. In various embodiments, the control cable 54 is supported and protected by a chain. Preferably, some type of e-chain or energy chain is used.

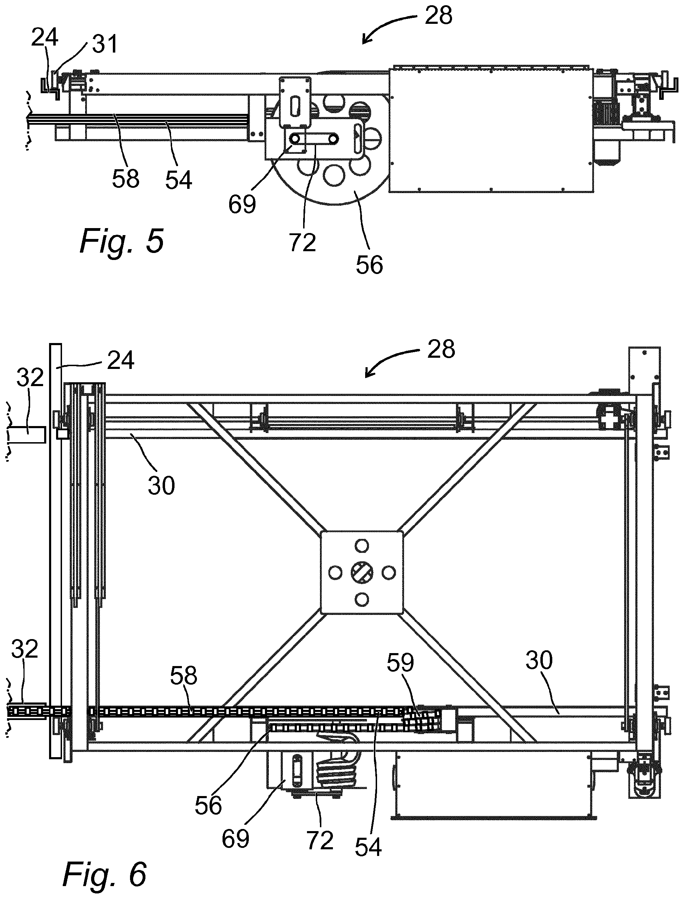

In the embodiment of a rectangular picker transfer cart 28 shown in Fig. 5 and Fig. 6 one cart wheel 31 is arranged in each corner. The cart wheels run on rails 24 extending along a picking aisle 19. Electrical power, compressed air and control signals are provided from the picker transfer cart 28 to the picker cart 40 through the control cable 54. The control cable 54 is supported by an e-chain 58 wound up on a cable winder 56 which is driven by a cable motor 69 through a chain 72. The length of the control cable 54 and e-chain corresponds to or extends the length of a storage line, so as to allow full operation of the picker cart 40 along the full length of a storage line. The considerable length of the e-chain 58 gives the cable winder 56 a large diameter.

The control cable 54 may comprise tubes, fibres and different types of electrical cables. The cable motor 69 has a defined moment to ensure that the e-chain 58 is properly stretched and that the picker cart 40 does not spin. The cable motor 69 is provided with a pulse transducer which is used to determine the movement and position of the picker cart 40. After leaving the picker transfer cart 28 the picker cart 40 will run on suspension rail arrangement 32 still being connected through the e-chain 58 and control cable 54. A roller chain generally and e-chain 58 specifically is comparatively stiff or rigid in a direction perpendicular to a running direction. Forces acting on the roller chain in the direction perpendicular to running direction causes wear and in the long run damages.

One embodiment of a chain roller 59 in accordance with the invention is shown in Fig. 7a and Fig. 7b. Basically, chain roller 59 in the shown embodiment comprises two discs 61 and a plurality of radially displaced and rotating rolls 63. Normally, at least four rotating rolls 63 are used. In the embodiment shown chain roller comprises eight rotating rolls 63 and e-chain 58 is guided to form two and a half turns over the rolls 63. Rolls 63 are all arranged approximately at the same radial distance from an axis or centre 57 of rotation of the chain roller 59. Generally, the more rotating rolls 63 the smoother movement of e-chain over chain roller 59. Rotating rolls 63 are rotatably connected to discs 61 at inclined directions in relation to axis of rotation 57. Discs 61 are mounted in a fixed position and will not rotate when e-chain 58 runs over rotating rolls 63.

From the cable winder 56 the e-chain 58 is guided over chain roller 59. The chain roller 59 will allow displacement of the e-chain in an axial direction from cable winder 56. This is normally necessary because a large diameter cable winder 56 will not fit on the picker transfer cart 28 in a position where e-chain 58 runs in the track along top rail arrangement 30 and suspension rail arrangement 32. The distance of axial displacement of e-chain will be D as shown in Fig. 7a. The two discs 61 can be circular and are rotated an angle *b* in relation to each other resulting in displacement of t mm of ends of and an inclined orientation of the rotating rolls 63 engaging circular discs 61.

The displacement t of ends of rotating rolls 63 is limited by the diameter and number of rotating rolls 63. Displacement t can be extended by an increased distance between rotating rolls and by a smaller diameter of rotating rolls. Each turn of the e-chain 58 over chain roller 59 forms a helix line *l* extending at an angle a degrees to a line extending in parallel with the plane of the circular discs. An effect of the rotation of the circular discs 61 is that an axial direction of each rotating roll 63 will be perpendicular to said helix line *l* where e-chain engages the rotating roll 63.

The helix shape of e-chain over rotating rolls 63 of chain roller 59 is formed to provide substantially lower friction in the e-chain and lower forces acting in a transverse direction because of the inclined extension of rotating rolls 63. The lower friction also will prevent unnecessary wear of e-chain and decrease pulling forces acting on it. It is also possible to operate at higher speeds. In various embodiments distance D is around 75 mm and angle a is about 3 degrees when a width w of e-chain is about 25 mm. also, one turn of e-chain around rotating rolls 63 has a length amounting approximately to 575 mm resulting in a diameter C of chain roller 59 of approximately 185 mm.

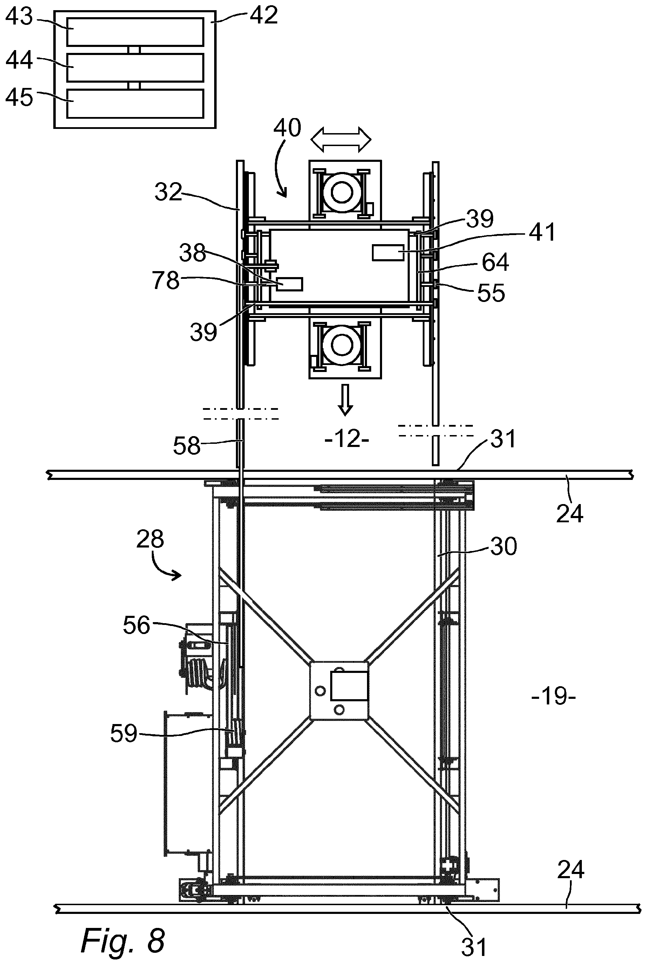

The picker cart 40 shown in Fig. 8 has moved into an end position in a storage line 12 suspended from said top rail arrangement 30 in picker transfer cart 28 and from said suspension rail arrangement 32 in said storage line 12, rail only shown on one side in Fig. 7. The picker cart 40 runs on a plurality of support wheels 55. The picker transfer cart 28 runs in a similar way on cart wheels 31 supported on said rails 24. An electric motor 38 drives the wheels 55 through drive shafts 39. The electric motor 38 includes a gearbox. A chain drive (not shown) or similar drive means can be arranged between shafts 39 and between wheels 55.

The baseboard transfer cart 20, picker transfer carts 28 and the picker carts 40 are provided with communication means 41 communicating with a central unit 42. The central unit 42 comprises a processing unit 43, a communication device 44 and memory means 45. The power lines in the rails 24 can be used for communication between the central unit 42 and the baseboard transfer carts 20 and the picker transfer carts 28, respectively. Stationary data, such as dimensions, distances and performance of the multi-storey goods storage arrangement, carts and other units are stored in the memory means 45.

Dynamic data relating to location and size of specific packages or goods, baseboard, speed of conveyors etc. are continuously received through the communication device 44 from carts and from a plurality of sensors and gauges arranged throughout the multi-storey goods storage arrangement. A control software running in the central unit continuously monitors and controls the function of the multi-storey goods storage arrangement. Information relating to different patterns or sets of packages is also stored and handled with the control software. As a result, any picked package can be positioned and monitored throughout the handling thereof within and out of the multi-storey goods storage arrangement.

While certain illustrative embodiments of the invention have been described in particularity, it will be understood that various other modifications will be readily apparent to those skilled in the art without departing from the scope and spirit of the invention. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. A chain roller (59) having a first axis of rotation (57) for guiding an e-chain (58) having a width w from an input running direction to an output running direction, wherein input running direction is substantially in parallel with output running direction and wherein output running direction is displaced substantially perpendicular to input running direction, ***characterised* by**
two discs (61) separated by a plurality of rotating rolls (63) supporting e-chain (58), wherein end sections of rotating rolls (63) engage said discs (61) in spaced apart positions at a radial distance from first axis of rotation (57), and wherein opposite ends of rotating rolls (63) engaging said discs (58) are displaced a distance t.

2. A chain roller (59) in accordance with claim 1, wherein discs (61) are rotated an angle *b* in relation to each other and around said first axis of rotation (57).

3. A chain roller (59) in accordance with claim 1 or claim 2, wherein length of rotating rolls (63) exceeds three times the width of e-chain (58).

4. A chain roller (59) in accordance with claim 1, wherein at least four rotating rolls (63) are arranged in equally spaced apart positions at a radial distance from first axis of rotation (57).

5. A chain roller (59) in accordance with claim 1, wherein eight rotating rolls (63) are arranged in equally spaced apart positions at a radial distance from first axis of rotation (57).

6. A cart (28) supporting a shuttle (40) moveable back and forth along a track after leaving cart (28), a chain roller (59) rotatatably supported by said cart (28) and having a first axis of rotation (57) for guiding an e-chain (58) having a width w from a cable winder (56) having a second axis of rotation to shuttle (40), ***characterised* in that** said chain roller (59) comprises two discs (61) separated by a plurality of rotating rolls (63) supporting e-chain (58), wherein end sections of rotating rolls (63) engage said discs (61) in spaced apart positions at a radial distance from first axis of rotation (57), and wherein opposite ends of rotating rolls (63) engaging said discs (58) are displaced a distance t from each other.

7. A cart (28) in accordance with claim 6, wherein length of rotating rolls (63) exceeds three times the width of e-chain (58).

8. A cart (28) in accordance with claim 6, wherein at least four rotating rolls (63) are arranged in equally spaced apart positions at a radial distance from first axis of rotation (57).

9. A cart (28) in accordance with claim 6, wherein eight rotating rolls (63) are arranged in equally spaced apart positions at a radial distance from first axis of rotation (57).
